# DEMANDE DE BREVET EUROPEEN

(11) **EP 4 546 612 A1**
(43) Date de publication de la demande: **30.04.2025**
(21) Numéro de dépôt: 24207885.5
(22) Date de dépôt: 21.10.2024
(51) Int. Cl.: H02K 1/2733, H02K 15/03, H02K 15/12

(54) **PROCÉDÉ D OBTENTION D'UN ROTOR POUR MACHINE ÉLECTRIQUE TOURNANTE**

(30) Priorité: 26.10.2023 FR 2311697
(71) Demandeur: Valeo eAutomotive Germany GmbH, 91056 Erlangen (DE)
(72) Inventeur: KEBBACHE, Abdelaziz, 94046 CRETEIL CEDEX (FR); SELOSSE, Didier, 62630 Etaples-sur-Mer (FR); BADEY, Jean-Philippe, 62630 Etaples-sur-Mer (FR); ARMIROLI, Paul, 94046 CRETEIL CEDEX (FR); MONTEIL, Christophe, 94046 CRETEIL CEDEX (FR); ASSAMAGOA, Jean-Clotaire, 94046 CRETEIL CEDEX (FR); BOUTINEAUD, Alexian, 62630 Etaples-sur-Mer (FR)
(74) Mandataire: Valeo Powertrain Systems

(57) **Abrégé**

La présente invention concerne un procédé d'obtention d'un rotor (1) d'une machine électrique tournante comprenant un corps de rotor (2), un élément magnétique et une frette (6), le procédé d'obtention comprenant une étape de positionnement du corps de rotor (2) au sein d'un moule d'injection (42) et une étape de placement de la frette (6) au sein du moule d'injection (42), de sorte que la frette (6) soit placée autour du corps de rotor (2), ainsi qu'une étape d'injection de l'élément magnétique, sous forme d'aimant lié (4), entre le corps de rotor (2) et la frette (6).

## Description

La présente invention concerne le domaine des véhicules automobiles, et plus particulièrement les machines électriques équipant ces véhicules automobiles.

Les véhicules automobiles électriques ou hybrides sont équipés de machines électriques tournantes, notamment des moteurs électriques avec au moins un stator et un rotor. Dans certaines de ces machines tournantes, des bobinages associés au stator génèrent, lorsqu'ils sont alimentés électriquement, un flux magnétique qui permet une rotation du rotor équipé d'aimants. Dans une machine tournante à flux radial, le flux magnétique est généré selon une direction radiale par rapport à un axe de rotation de la machine électrique et le rotor tourne autour de cet axe de rotation en fonction de l'orientation du champ magnétique radial.

Les rotors de ces machines tournantes comportent classiquement une frette et un élément magnétique. Cette frette permet d'assurer un maintien en position de l'élément magnétique du rotor, notamment en assurant sa tenue lorsque le rotor tourne à grande vitesse. La frette comporte une paroi radiale interne, une paroi radiale externe et une paroi de fond qui délimitent des logements ouverts sur le dessus pour recevoir des portions de l'élément magnétique. L'élément magnétique est de la sorte disposé au sein de la frette, contre un fond de celle-ci.

L'élément magnétique est classiquement un aimant solide, qui nécessite des opérations d'assemblage pour être solidarisé à la frette. Cependant, tant la disposition de l'élément magnétique au sein de la frette que leur solidarisation l'un à l'autre sont des opérations complexes. Il est en effet difficile de maîtriser les tolérances dimensionnelles entre ces deux composants. Par ailleurs, la fabrication du rotor nécessite un temps et un investissement considérables, du fait de la multiplication des opérations de positionnement et d'assemblage.

La présente invention s'inscrit dans ce contexte en proposant un procédé de fabrication d'un rotor grâce auquel la réalisation du rotor est simplifiée, tout réduisant le nombre des opérations nécessaires.

La présente invention a ainsi pour principal objet un procédé d'obtention d'un rotor d'une machine électrique tournante comprenant un corps de rotor, un élément magnétique et une frette, le procédé d'obtention comprenant les étapes suivantes :
- positionnement du corps de rotor au sein d'un moule d'injection ;
- placement de la frette autour du corps de rotor de manière à former une chambre annulaire,
- injection de l'élément magnétique, sous forme d'aimant lié, dans la chambre annulaire.

Le procédé d'obtention selon l'invention correspond à la fabrication d'un rotor destiné à être intégré dans une machine électrique tournante et notamment dans une machine tournante à flux radial. Le procédé d'obtention fait intervenir un moule d'injection présentant une cavité, au sein de laquelle sont tour à tour positionnés un corps de rotor et une frette, respectivement au cours d'une étape de positionnement et d'une étape de placement. Soit l'étape de positionnement du corps de rotor survient avant l'étape de placement de la frette, soit à l'inverse l'étape de placement de la frette a lieu préalablement à l'étape de positionnement du corps de rotor. Le corps de rotor est positionné au plus proche d'un pion central du moule d'injection tandis que la frette est placée le long d'un bord externe de ce moule d'injection. Le corps de rotor et la frette sont disposés de sorte à ne pas être au contact l'un de l'autre ; en d'autres termes, à l'issue des étapes de positionnement et de placement un espace subsiste entre ces deux composants. Le corps de rotor et la frette étant de forme annulaire, cet espace correspond à une chambre annulaire.

Une fois le corps de rotor et la frette disposés dans le moule, le procédé d'obtention comprend une étape d'injection au cours de laquelle un élément magnétique du rotor, ici un aimant lié, est injecté au sein du moule d'injection dans la chambre annulaire entre le corps de rotor et la frette. Le matériau constituant l'aimant lié polymérise ensuite pour former, avec le corps de rotor et la frette, un ensemble de composants solidarisés.

Le recours à l'injection permet de gérer facilement la disposition de l'aimant lié relativement à celles du corps de rotor et de la frette. En effet, l'aimant lié épouse à la fois la forme du corps de rotor et celle de la frette. L'injection permet également de s'affranchir de la paroi de fond de la frette, l'aimant lié étant au cours du procédé d'obtention retenu par le moule d'injection. En outre, l'injection permet de combiner des opérations de positionnement et d'assemblage qui étaient auparavant dissociées lors de la réalisation des rotors de l'art antérieur.

Selon une caractéristique optionnelle de l'invention, le corps de rotor comprend des entailles, une partie de l'aimant lié étant insérée au sein des entailles du corps de rotor au cours de l'étape d'injection.

Les entailles du corps de rotor sont des découpes qui s'étendent au moins radialement à partir d'un bord du corps de rotor qui est en regard de la frette. Les entailles sont de forme annulaire. Elles s'étendent, selon les modes de réalisation, sur tout un pourtour du corps de rotor ou sur une portion de ce pourtour. Lorsque l'aimant lié est injecté dans le moule d'injection, il remplit ces entailles.

Selon une caractéristique optionnelle de l'invention, la frette comprend des encoches, une partie de l'aimant lié étant insérée au sein des encoches de la frette au cours de l'étape d'injection.

Les encoches de la frette sont des découpes qui s'étendent au moins radialement à partir d'une face de la frette qui est en regard du corps de rotor. Les encoches ne sont pas continues le long de cette face interne de la frette ; ainsi, il y a une pluralité d'encoches disposées à distance les unes des autres sur une même circonférence de la frette s'inscrivant dans la face interne de la frette en regard du corps de rotor. Lorsque l'aimant lié est injecté dans le moule d'injection, il remplit ces encoches.

Selon une caractéristique optionnelle de l'invention, le procédé d'obtention comprend une étape de pré-magnétisation de l'aimant lié au sein du moule d'injection, cette étape de pré-magnétisation faisant intervenir des bobinages disposés dans le moule d'injection autour d'une zone de placement de la frette.

Les bobinages sont disposés à équidistance les uns des autres au sein du moule d'injection. Leur orientation dépend du type de magnétisation recherché ; ainsi, les bobinages seront droits, c'est-à-dire parallèles à l'axe de rotation du rotor, pour une magnétisation selon un arrangement de Hallbach, ou au contraire elles seront inclinées par rapport à l'axe de rotation du rotor dans le cadre d'un rotor incliné ou vrillé. L'étape de pré-magnétisation a pour but d'orienter les charges magnétiques de l'aimant lié formé d'une matière polymère dans laquelle sont noyés des particules ou grains de matière magnétique. Ces grains de matière magnétique qui participent à former l'aimant lié s'orientent ainsi selon des lignes de champs définies au sein du moule d'injection, qui est dans un champ magnétique. Lorsque la matière polymère constituant l'aimant lié polymérise, les positions de ses grains de matière magnétique se figent. L'aimant lié présente alors une orientation magnétique figée.

Selon une caractéristique optionnelle de l'invention, le procédé d'obtention comprend une étape de magnétisation de l'aimant lié en dehors du moule d'injection.

L'aimant lié est remagnétisé de sorte à lui redonner une charge magnétique en respectant les orientations préalablement définies. À cet effet, le corps de rotor comprend des moyens d'indexage permettant de faciliter la magnétisation en fonction de secteurs angulaires définis lors de la pré-magnétisation.

Les opérations de pré-magnétisation et de magnétisation peuvent avoir lieu en des endroits distincts. À titre d'exemple, la pré-magnétisation peut être réalisée chez fournisseur et la magnétisation chez un client, l'aimant lié subissant alors une étape de démagnétisation entre l'étape de pré-magnétisation et l'étape de magnétisation afin de faciliter son transport.

L'invention concerne par ailleurs un rotor d'une machine électrique tournante susceptible d'être réalisé selon le procédé d'obtention tel qu'évoqué précédemment, le rotor présentant un axe de rotation et comprenant un corps de rotor et une frette disposée autour du corps de rotor de manière à former une chambre annulaire, et un aimant lié disposé dans ladite chambre annulaire.

Le rotor selon l'invention est destiné à faire partie d'une machine électrique tournante, par exemple un moteur à flux radial, en vue de son installation au sein d'un véhicule automobile électrique ou hybride. Le corps de rotor permet de solidariser l'aimant lié à un élément d'arbre moteur de la machine électrique tournante. La frette a pour rôle de maintenir en position l'aimant lié lorsque le rotor tourne à grande vitesse et d'éviter un risque d'éclatement de l'aimant lié.

Le corps de rotor, l'aimant lié et la frette sont disposés dans cet ordre autour de l'axe de rotation du rotor, ce qui est le résultat de la disposition initiale du corps de rotor et de la frette au sein du moule d'injection.

Selon une caractéristique optionnelle de l'invention, l'aimant lié comprend des languettes qui s'étendent dans un plan perpendiculaire à l'axe de rotation du rotor au sein du corps de rotor et/ou de la frette.

En d'autres termes, les languettes de l'aimant lié s'étendent radialement au sein du corps de rotor et/ou de la frette.

Selon une caractéristique optionnelle de l'invention, les languettes de l'aimant lié s'étendent au sein d'entailles du corps de rotor.

Selon une caractéristique optionnelle de l'invention, les languettes de l'aimant lié s'étendent au sein d'encoches de la frette.

La présence d'une portion de l'aimant lié, à savoir ses languettes, au sein des entailles du corps de rotor et/ou des encoches de la frette permet de limiter des glissements entre les différents éléments du rotor au cours du fonctionnement de la machine électrique tournante.

Selon une caractéristique optionnelle de l'invention, la frette présente une forme annulaire.

Notamment, la frette selon l'invention est contrairement aux frettes de l'art antérieur dépourvue de fond. Un tel fond, dont la fonction est de retenir l'aimant lié, n'est en effet pas nécessaire puisque l'aimant lié est injecté. En outre, lors du procédé d'obtention c'est le moule d'injection qui permet de retenir l'aimant lié.

Selon une caractéristique optionnelle de l'invention, la frette comprend au moins une collerette, de préférence ajourée, en recouvrement partiel de l'aimant lié.

La collerette correspond à une surépaisseur de la frette qui s'étend en direction de l'axe de rotation du rotor.

Dans certains modes de réalisation, la collerette est discontinue le long d'un pourtour de la frette, ce qui facilite la faisabilité du procédé d'obtention du rotor. Cette discontinuité a pour but de bloquer la rotation de la frette sur l'aimant lié lors du fonctionnement de la machine. Alternativement, la collerette s'étend sur tout le pourtour de la frette.

Selon une caractéristique optionnelle de l'invention, l'aimant lié présente un bord d'extrémité axial qui participe à former un bord périphérique axial du rotor.

Le bord d'extrémité axial délimite l'aimant lié selon une direction parallèle à l'axe de rotation du rotor. Le bord périphérique axial délimite le rotor selon une direction parallèle à cet axe de rotation du rotor. On comprend que l'aimant lié est au moins partiellement dégagé au sein du rotor. En d'autres termes, l'aimant lié n'est pas intégralement recouvert par la frette, cette frette étant dépourvue de paroi de fond.

Selon une caractéristique optionnelle de l'invention, le corps de rotor comprend une première portion destinée à être au contact d'un élément d'arbre moteur et une deuxième portion au contact de l'aimant lié, le corps de rotor comprenant des branches s'étendant radialement entre la première portion et la deuxième portion.

La première portion et la deuxième portion présentent des formes annulaires. Elles sont reliées l'une à l'autre par les branches du corps de rotor. En vue de coupe selon un plan perpendiculaire à l'axe de rotation du rotor, les branches s'étendent en étoile à partir de la première portion. La présence de branches reliant la première portion et la deuxième portion plutôt qu'un corps plein permet de limiter le poids du corps de rotor.

Selon une caractéristique optionnelle de l'invention, l'aimant lié est réalisé à partir d'un alliage de terres rares ou ferrites et d'un matériau liant amagnétique.

L'alliage de terres rares comprend par exemple du néodyme, du fer et du bore. Le matériau amagnétique est notamment une résine telle qu'un thermoplastique à base de polyamide ou de sulfure de polyphénylène.

L'invention concerne en outre une machine électrique tournante comprenant un rotor tel qu'évoqué précédemment et au moins un stator.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] illustre, schématiquement, un rotor d'une machine électrique tournante selon l'invention, comprenant un corps de rotor, une frette et un aimant lié ayant été injecté entre le corps de rotor et la frette.
[Fig. 2] illustre, schématiquement et de façon isolée, le corps de rotor de la figure 1 ;
[Fig. 3] illustre, schématiquement, un moule d'injection au sein duquel sont disposés le corps de rotor, la frette et l'aimant lié injecté de la figure 1.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » précisent l'orientation du rotor pour machine électrique tournante selon l'invention, ces dénominations se référant à un repère L, V, T illustré sur les figures.

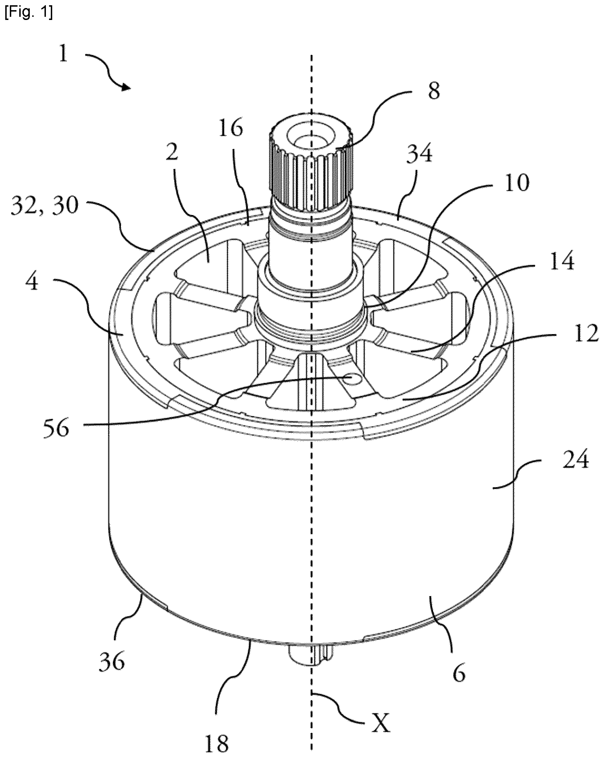

Les figures 1 à 3 illustrent ainsi, schématiquement, un rotor 1 selon l'invention. Ce rotor 1 est destiné à être intégré au sein d'une machine électrique tournante, par exemple un moteur électrique à flux radial comprenant en outre au moins un stator, afin d'équiper un véhicule hybride ou électrique, par exemple une automobile, un camion, un vélo ou un objet qui se déplace avec son système de traction tel qu'un drone. Un tel véhicule peut en outre comprendre un système de conduite autonome.

La machine électrique tournante est apte à fonctionner dans un mode alternateur pour fournir notamment de l'énergie à la batterie et au réseau de bord du véhicule, et dans un mode moteur, non seulement pour assurer le démarrage du moteur thermique du véhicule, mais également pour participer à la traction du véhicule seule ou en combinaison avec le moteur thermique.

La puissance de la machine pourra être comprise entre 4kW et 50kW. Alternativement, la machine électrique pourra être implantée sur un essieu du véhicule automobile, notamment un essieu arrière. Dans l'exemple considéré, la machine électrique présente avantageusement une tension de fonctionnement inférieure à 60 Volts, et valant de préférence 48Volts. Typiquement, le couple fourni par la machine électrique est compris entre 30N.m et 150N.m. En alternative, la machine électrique pourra présenter une tension de fonctionnement de plus de 60V, voire plus de 80V ou plus de 100V, notamment 300V ou plus. Dans le cadre d'un fonctionnement en haute tension la machine présentera typiquement une tension de fonctionnement comprise entre 400 et 800V, une puissance jusqu'à 350kW et un fournira un couple jusqu'à 400N.m.

Le rotor 1 comprend un corps de rotor 2, un élément magnétique sous la forme d'un aimant lié 4 ainsi qu'une frette 6. Ces éléments constitutifs du rotor 1 sont disposés dans cet ordre autour d'un axe de rotation X du rotor 1.

Le corps de rotor 2 est disposé autour d'un élément d'arbre moteur 8 qui est représenté à la figure 1. Le corps de rotor 2 est un élément métallique, par exemple en acier. Le corps de rotor 2 est composé d'une première portion 10 annulaire, d'une deuxième portion 12 annulaire et de branches 14 s'étendant radialement entre la première portion 10 et la deuxième portion 12. La première portion 10 entoure l'élément d'arbre moteur 8 tandis que la deuxième portion 12, d'un diamètre plus important que la première portion 10, est disposée au contact de l'aimant lié 4. Entre la première portion 10 et la deuxième portion 12, les branches 14 s'étendent en étoile ; on comprend qu'entre ces branches, le corps de rotor 1 est dépourvu de matière. Les branches 14 sont disposées à des intervalles réguliers entre la première portion 10 et la deuxième portion 12. Le corps de rotor 2 comprend ici huit branches 14, mais on pourrait sans sortir du cadre de l'invention envisager un corps de rotor 2 présentant un nombre différent de branches 14.

Les branches 14 s'étendent sur toute une hauteur du rotor 1, une telle hauteur étant mesurée le long de l'axe de rotation X du rotor 1. En d'autres termes, les branches 14 s'étendent depuis un premier bord périphérique axial 16 du corps de rotor 2 jusqu'à un deuxième bord périphérique axial 18 de celui-ci, ces bords périphériques axiaux 16, 18 étant opposés selon une direction parallèle à l'axe de rotation X du rotor 1.

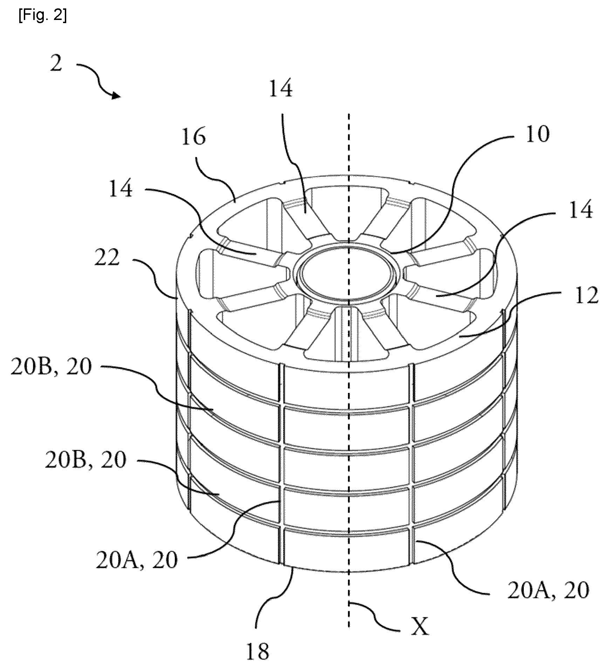

Le corps de rotor 2 présente des entailles 20, visibles sur la figure 2, qui sont ménagées au sein de sa deuxième portion 12. Les entailles 20 sont plus précisément ménagées au sein d'une face de contact 22 de la deuxième portion 12 du corps de rotor 2 qui est destinée à être en regard de l'aimant lié 4 et au contact de celui-ci.

Les entailles 20, qui sont particulièrement visibles sur la figure 2 dans laquelle le corps de rotor 2 est représenté isolément, s'étendent à partir de la face de contact 22 en direction de l'axe de rotation X du rotor 1. Les entailles 20 ne traversent pas la deuxième portion 12 de part en part. Les entailles 20 comprennent des premières entailles 20A qui s'étendent axialement, c'est-à-dire parallèlement à l'axe de rotation X du rotor 1, ainsi que des deuxièmes entailles 20B qui s'étendent radialement autour de la deuxième portion 12, c'est-à-dire le long d'une circonférence du corps de rotor 2. On comprend que les premières entailles 20A et les deuxièmes entailles 20B sont perpendiculaires les unes aux autres. Le quadrillage d'entailles 20 qui est ainsi formé au sein du corps de rotor 2 permet une couverture optimale, mais on pourrait sans sortir du cadre de l'invention envisager un autre agencement des entailles 20.

Le corps de rotor 2 délimite radialement le rotor 1 au plus proche de l'axe de rotation X du rotor 1 tandis que la frette 6 délimite radialement le rotor 1 pour sa partie la plus éloignée de cet axe de rotation X. En d'autres termes, le corps de rotor 2 constitue une extrémité radiale interne du rotor 1 au voisinage de l'axe de rotation X et la frette 6 constitue une extrémité radiale externe opposée du rotor 1 à distance de l'axe de rotation X.

La frette 6 est un élément annulaire amagnétique qui est par exemple réalisé en acier inoxydable ou en carbone. La frette 6 comprend une face externe 24 orientée vers un extérieur du rotor 1 et une face interne 26, opposée radialement à la face externe 24, en regard de l'aimant lié 4 et du corps de rotor 2.

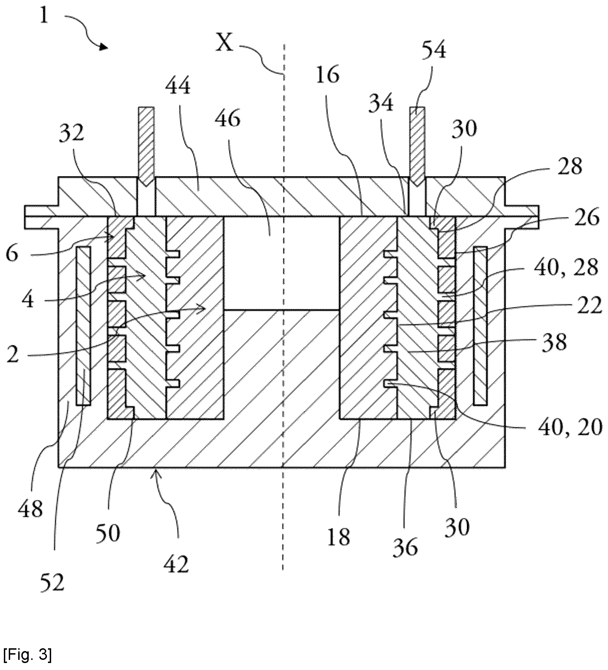

La frette 6 comporte des encoches 28 ménagées au moins dans sa face interne 26. Ces encoches 28 sont ici séparées circonférentiellement les unes des autres ; en d'autres termes, elles ne sont pas continues le long de la frette 6. Comme cela est illustré en figure 3, les encoches 28 sont traversantes, c'est-à-dire qu'elles s'étendent de la face interne 26 de la frette à sa face externe 24. Dans un mode de réalisation alternatif ici non représenté, les encoches 28 pourraient s'étendre radialement sur toute une circonférence de la face interne 26, étant entendu qu'elles ne seraient alors pas traversantes, c'est-à-dire qu'elles ne s'étendraient que partiellement dans l'épaisseur de la frette.

Tel que cela est visible sur la figure 3, qui est une vue en coupe sur laquelle sont visibles à la fois les entailles 20 du corps de rotor 2 et les encoches 28 de la frette 6, les deuxièmes entailles 20B et les encoches 28 sont disposées à des hauteurs différentes le long d'une direction parallèle à l'axe de rotation X du rotor 1. En d'autres termes, une deuxième entaille 20B donnée du corps de rotor 2 n'est pas disposée en face d'une encoche 28 donnée de la frette 6.

Comme cela est illustré aux figures 1 et 3, la frette 6 présente au moins une collerette 30. Cette collerette 30 prolonge le corps annulaire de la frette 6 en direction de l'axe de rotation X du rotor 1. La collerette 30 est disposée le long d'un pourtour 32 de la frette 6. Ce pourtour 32 correspond à un rebord qui délimite la frette 6 par rapport à une direction parallèle à l'axe de rotation X du rotor 1. Il existe ainsi une collerette 30 pour chacun des pourtours 32 qui délimitent la frette 6, c'est-à-dire au niveau du premier bord périphérique axial 16 du rotor 1 et au niveau de son deuxième bord périphérique axial 18.

Tel que cela est particulièrement visible à la figure 1, la collerette 30 est ici ajourée, c'est-à-dire qu'elle s'étend partiellement le long du pourtour 32. La collerette 30 est ici divisée en trois portions réparties à des intervalles réguliers autour du pourtour 32. On pourrait cependant envisager, sans sortir du cadre de l'invention, des modes de réalisation dans lesquels la collerette 30 serait continue le long du pourtour 32.

La collerette 30 est en recouvrement partiel de l'aimant lié 4. L'aimant lié 4 présente une forme générale annulaire. Il s'étend radialement entre la face de contact 22 de la deuxième portion 12 du corps de rotor 2 et la face interne 26 de la frette 6 et il s'étend, le long d'une direction parallèle à l'axe de rotation X du rotor 1, entre un premier bord d'extrémité axial 34 et un deuxième bord d'extrémité axial 36. Entre le premier bord d'extrémité axial 34 et le deuxième bord d'extrémité axial 36, l'aimant lié 4 comprend une zone centrale 38. Une des collerettes 30 est plus particulièrement en recouvrement d'une partie du premier bord d'extrémité axial 34 et l'autre des collerettes 30 est en recouvrement d'une partie du deuxième bord d'extrémité axial 36. On comprend donc qu'au niveau de la collerette 30, l'aimant lié 4 présente une hauteur, mesurée le long d'une direction parallèle à l'axe de rotation X du rotor 1, inférieure à une hauteur de l'aimant lié 4 mesurée au voisinage du corps de rotor 2.

En outre, du fait de la collerette 30, une dimension radiale du premier bord d'extrémité axial 34 de l'aimant lié 4 et/ou une dimension du deuxième bord d'extrémité axial 36, mesurée dans un plan perpendiculaire à l'axe de rotation X du rotor 1 en regard de la collerette 30, est inférieure à une dimension de la zone centrale 38 mesurée dans ce plan perpendiculaire.

Comme cela a été évoqué précédemment, la collerette 30 ne recouvre que partiellement l'aimant lié 4. De ce fait, l'aimant lié 4 est découvert, au moins partiellement, au sein du rotor 1. Autrement dit, à l'exception de la collerette 30 le premier bord d'extrémité axial 34 de l'aimant lié 4 forme le premier bord périphérique axial 14 du rotor 1 et le deuxième bord d'extrémité axial 36 de l'aimant lié 4 forme le deuxième bord périphérique axial 16 du rotor 1.

Tel que cela est particulièrement visible à la figure 3, l'aimant lié 4 présente des languettes 40. Les languettes 40 correspondent à une augmentation ponctuelle d'une dimension radiale de l'aimant lié 4 mesurée dans un plan perpendiculaire à l'axe de rotation X du rotor 1. Ces languettes 40 s'étendent radialement à partir de la zone centrale 38 de l'aimant lié 4, à la fois en direction du corps de rotor 2 et de la frette 6. Les languettes 40 sont plus précisément positionnées au sein des entailles 20 du corps de rotor 2 et des encoches 28 de la frette 6. Un tel positionnement des languettes 40 résulte de l'injection de l'aimant lié 4 dans une chambre annulaire entre le corps de rotor 2 et la frette 6 au cours d'un procédé d'obtention qui va maintenant être détaillé.

Le procédé d'obtention du rotor 1 selon l'invention aboutit à la fabrication d'un rotor 1 tel qu'il a été décrit ci-avant. Le procédé d'obtention nécessite l'utilisation d'un moule d'injection 42 en forme générale de cylindre de base arrondie. Le moule d'injection 42 comprend une cavité annulaire qui est délimitée radialement par un pion central 46 et par un rebord annulaire 48. La cavité est délimitée axialement par une paroi de fond 50 et par un couvercle 44. Des bobinages 52 sont disposés autour de la cavité, par exemple au sein du rebord annulaire 48 tel que cela est visible à la figure 3.

Le procédé d'obtention débute par des étapes de fabrication du corps de rotor 2 et de la frette 6. Le corps de rotor 2 est par exemple réalisé en acier, tandis que la frette 6 est réalisée en acier inoxydable. Chacun du corps de rotor 2 et de la frette 6 sont fabriqués de sorte à présenter leurs entailles 20 et encoches 28 respectives.

Le procédé d'obtention comprend une étape de positionnement du corps de rotor 2 au sein du moule d'injection 42. Le corps de rotor 2 est plus précisément disposé contre la paroi de fond 50 et autour du pion central 46 du moule d'injection 42, dont un diamètre est sensiblement identique à celui de l'élément d'arbre moteur 8 évoqué précédemment. Ainsi, la première portion 10 du corps de rotor 2 est au contact du pion central 46.

Au cours d'une étape de placement, la frette 6 est à son tour disposée au sein de la cavité du moule d'injection 42, au contact de sa paroi de fond 50 et de son rebord annulaire 48. Plus précisément, la face externe 24 de la frette 6 est placée au contact du rebord annulaire 48. Le procédé se poursuit par une étape de fermeture au cours de laquelle le moule d'injection 42 est fermé par le couvercle 44, qui délimite une extrémité radiale du rotor 1. Le couvercle 44 repose sur le corps de rotor 2 et sur la frette 6. On comprend de ce qui précède que le corps de rotor 2 et la frette 6 sont disposés à distance radiale l'un de l'autre au sein du moule d'injection 42, de sorte à former entre eux une chambre annulaire. Selon l'invention, lors d'une étape d'injection l'aimant lié 4 est injecté au sein de cette chambre annulaire entre le corps de rotor 2 et la frette 6.

Le matériau composant l'aimant lié 4, ici un alliage de terres rares et un matériau polymère amagnétique, est ainsi injecté au sein du moule d'injection 42 à l'aide de buses d'injection 54. Le matériau composant l'aimant lié 4 est déposé contre la paroi de fond 50 de la cavité du moule d'injection 42. Il remplit la chambre annulaire ainsi que les entailles 20 du corps de rotor 2 et les encoches 28 de la frette 6. Le matériau composant l'aimant lié 4 est injecté au sein de la cavité du moule d'injection 42 jusqu'au niveau du premier bord périphérique axial 16 du rotor 1, et en regard de la collerette 30 jusqu'au pourtour 32 de la frette 6.

Une fois l'aimant lié 4 injecté entre le corps de rotor 2 et la frette 6, le procédé d'obtention comprend une étape de pré-magnétisation au cours de laquelle les bobinages 52 disposés au sein du rebord annulaire 48 sont alimentés électriquement pour orienter des charges magnétiques de l'aimant lié 4. Lorsque les charges magnétiques de l'aimant lié 4 sont figées, c'est-à-dire une fois que le matériau composant l'aimant lié 4 a polymérisé, le corps de rotor 2, l'aimant lié 4 et la frette 6 forment un ensemble monobloc.

Le rotor 1 ainsi formé peut ensuite être sorti du moule d'injection 42 et démagnétisé en vue de son transport.

Le procédé d'obtention comprend ensuite une étape d'assemblage du rotor 1 à l'élément d'arbre moteur 8, au cours de laquelle cet élément d'arbre moteur 8 est inséré au sein de la première portion 10 du corps de rotor 2. Le procédé d'obtention peut se poursuivre par une étape de magnétisation qui permet de redonner à l'aimant lié 4 une charge magnétique selon les orientations déterminées au cours de l'étape précédente de pré-magnétisation. L'étape de magnétisation est facilitée par la présence de moyens d'indexage, ici des trous 56, qui donnent à un opérateur fabriquant le rotor 1 des informations concernant l'orientation à respecter selon ce qui a été défini au cours de l'étape de pré-magnétisation. Le rotor 1 peut ensuite être associé à un stator afin de former une machine électrique tournante.

La présente invention propose ainsi un procédé d'obtention d'un rotor simplifié en termes de nombre d'opérations, la gestion des tolérances dimensionnelles entre un élément magnétique et d'autres composants du rotor étant en outre facilitée.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Procédé d'obtention d'un rotor (1) d'une machine électrique tournante comprenant un corps de rotor (2), un élément magnétique et une frette (6), le procédé d'obtention comprenant les étapes suivantes :
- positionnement du corps de rotor (2) au sein d'un moule d'injection (42) ;
- placement de la frette (6) autour du corps de rotor (2) de manière à former une chambre annulaire ;
- injection de l'élément magnétique, sous forme d'aimant lié (4), dans la chambre annulaire.

2. Procédé d'obtention d'un rotor (1) selon la revendication précédente, dans lequel le corps de rotor (2) comprend des entailles (20, 20A, 20B), une partie de l'aimant lié (4) étant insérée au sein des entailles (20, 20A, 20B) du corps de rotor (2) au cours de l'étape d'injection.

3. Procédé d'obtention d'un rotor (1) selon l'une quelconque des revendications précédentes, dans lequel la frette (6) comprend des encoches (28), une partie de l'aimant lié (4) étant insérée au sein des encoches (28) de la frette (6) au cours de l'étape d'injection.

4. Procédé d'obtention d'un rotor (1) selon l'une quelconque des revendications précédentes, comprenant une étape de pré-magnétisation de l'aimant lié (4) au sein du moule d'injection (42), cette étape de pré-magnétisation faisant intervenir plusieurs bobinages (52) disposés dans le moule d'injection (42) autour d'une zone de placement de la frette (6).

5. Procédé d'obtention d'un rotor (1) selon l'une quelconque des revendications précédentes, comprenant une étape de magnétisation de l'aimant lié (4) en dehors du moule d'injection (42).

6. Rotor (1) d'une machine électrique tournante susceptible d'être réalisé selon le procédé d'obtention selon l'une quelconque des revendications précédentes, le rotor présentant un axe de rotation (X) et comprenant un corps de rotor (2) et une frette (6) disposée autour du corps de rotor (2) de manière à former une chambre annulaire, et un aimant lié (4) disposé dans ladite chambre annulaire.

7. Rotor (1) selon la revendication précédente, dans lequel l'aimant lié (4) comprend des languettes (40) qui s'étendent dans un plan perpendiculaire à l'axe de rotation (X) du rotor (1) au sein du corps de rotor (2) et/ou de la frette (6).

8. Rotor (1) selon la revendication 7, dans lequel les languettes (40) de l'aimant lié (4) s'étendent au sein d'entailles (20, 20A, 20B) du corps de rotor (2).

9. Rotor (1) selon l'une quelconque des revendications 7 à 8, dans lequel les languettes (40) de l'aimant lié (4) s'étendent au sein d'encoches (28) de la frette (6).

10. Rotor (1) selon l'une quelconque des revendications 6 à 9, dans lequel la frette (6) comprend au moins une collerette, de préférence ajourée, en recouvrement partiel de l'aimant lié (4).

11. Rotor (1) selon l'une quelconque des revendications 6 à 10, dans lequel l'aimant lié (4) présente un bord d'extrémité axial (34, 36) qui participe à former un bord périphérique axial (16, 18) du rotor (1).

12. Rotor (1) selon l'une quelconque des revendications 6 à 11, dans lequel l'aimant lié (4) est réalisé à partir d'un alliage de terres rares ou ferrites et d'un matériau liant amagnétique.

13. Machine électrique tournante comprenant un rotor (1) selon l'une quelconque des revendications 6 à 12 et au moins un stator.
